# EUROPEAN PATENT SPECIFICATION

(11) **EP 4 202 429 B1**
(45) Date of publication and mention of the grant of the patent: **25.09.2024**
(21) Application number: 21217822.2
(22) Date of filing: 27.12.2021
(51) Int. Cl.: G01N 27/327, G01N 27/406

(54) **METHOD OF MANUFACTURING AN ELECTROCHEMICAL CELL AND AN ELECTROCHEMICAL CELL**
VERFAHREN ZUR HERSTELLUNG EINER ELEKTROCHEMISCHEN ZELLE SOWIE ELEKTROCHEMISCHE ZELLE
PROCÉDÉ DE FABRICATION D'UNE CELLULE ÉLECTROCHIMIQUE ET CELLULE ÉLECTROCHIMIQUE

(30) Priority: 23.12.2021 LT 2021576
(43) Date of publication of application: 28.06.2023
(73) Proprietor: Vmti Fiziniu Ir Technologijos Mokslu Centras, 02300 Vilnius (LT)
(72) Inventor: Ramanavicius, Arunas, Vilnius (LT); Ramanavicius, Simonas, Vilnius, (LT); Samukaite Bubniene, Urte, Vilnius (LT); Sinkevicius, Linas, Vilnius (LT); Ramanaviciene, Almira, Vilnius (LT)
(74) Representative: Pakeniene, Ausra

(56) References cited:
- WO-A1-2017/022992
- WO-A2-2012/128593
- US-A- 5 173 162
- US-A1- 2002 184 939

## Description

### TECHNICAL FIELD

The invention relates a method of manufacturing an electrochemical cell according to claim 1 and its dependent claims.

Further, an electrochemical cell obtained by the method according to any of claims 1 to 7 is defined.

### BACKGROUND ART

Various electrochemical cells are developed depending on demands and application areas. For sensing and biosensing purposes mostly miniature electrochemical cells are required, however, recently applied procedures, which are necessary for electrode fabrication, are at least partly manual and long lasting, e.g. electrodes can be formed by melting of metal-based wires within glass or sealing within non-conducting ceramics or plastics, by screen printing techniques and by photolithography. These methods are rather time consuming and do not always easily fits with recently automated methods that are applied for the design of recent micro-electronics-based approaches/techniques. Therefore, methods that are applied for the development of standard microelectronics-based devices are welcome for the design of electrodes and/or entire electrochemical cells. The reduction of electrode dimensions is also very important since it enables to reduce the background noise of the sensor and by this to increase the sensitivity and/or selectivity of the sensor.

Common techniques and methods recently used for the development of electrochemical cells have such disadvantages: melting of metal-based wires within glass or sealing within non-conducting ceramics or plastics is a very long procedure and mostly requires many steps, which sometimes are performed manually, developed electrodes are of rather large dimensions; screen printing techniques can be automated but are not integrated into machineries based assembly of electronics plates, moreover, this technique needs application of harmful solvents and solutions and rather high temperatures, over 120°C, for drying out of formed structures; photolithography is a rather complex multi-step procedure, which should be performed on the electronics plate before the integration of other components of microelectronics.

A US patent application No. US15/749,257 discloses a multi-layer ceramic/metal type gas sensor and manufacturing method of the same. A sensor body of the gas sensor is formed by a design of multi-layered ceramic/metal platform with a plurality of sequential layer structures of ceramic dielectric material and metal are layered. The sensor body includes at least one layered body wherein a ceramic dielectric material, a first internal electrode, a ceramic dielectric material, and a second internal electrode are sequentially layered. The first internal electrode and the second internal electrode are exposed through a cut surface by cutting. The first internal electrode is electrically connected to a first electrode terminal disposed on a first side of the sensor body, and the second internal electrode is electrically connected to a second electrode terminal disposed on a second side of the sensor body facing the first side. The first and the second internal electrode are exposed to form a sensing surface on at least one side of the sensor body excluding a side where the first and the second electrode terminal are installed. A gas sensing material layer for gas detection is formed on a portion or an entire upper portion of the sensing surface, or a metal film whose contact resistance with the gas sensing material layer is lower than the first and the second internal electrode is formed on the upper portions of the first and the second internal electrode, which are exposed and a gas sensing material layer for gas detection, is formed on a portion or an entire upper portion of the sensing surface where the metal film is formed. The invention is targeted for the design of gas sensors only, which are suitable to be applied for operation only in a gaseous environment.

WO 2012/128593 A2 describes a sensor having an embedded electrode, which can be manufactured at a reduced cost and applied to many different fields. The sensor comprises a sensing stack in which a first conductive layer and a second conductive layer are stacked and layered with a separation layer interposed there-between ; and an electrode terminal arranged at a side surface of the sensing stack and electrically connected to the first and second conductive layers. The first and second conductive layers are exposed on at least one side surface of the sensing stack except for the side surface on which the electrode terminal is arranged, to thereby form a sensing surface.

Operation of electrochemical systems, which contain liquids and/or liquid electrolytes is very different in comparison to that of operation of systems operating in gaseous environment. Therefore, electrochemical systems are much more complex, and for this reason development of electrochemical systems is much more sophisticated in comparison to the development of analytical systems dedicated for gas analysis, which are based on simple variation of resistance between two electrodes.

The present invention is dedicated to overcoming the above mentioned shortcomings and for the achievement of further additional advantages over prior art and by possibility to apply in electrochemical systems of any type commercial multilayered metal-insulator capacitors

### BRIEF DESCRIPTION OF THE INVENTION

The invention is a method for obtaining electrochemical cells with interdigitate electrode system comprising at least one modified micro multi-layered ceramic-metal capacitator. Plates of conducting electrodes of such micro multi-layered ceramic-metal capacitator dependently on model have thickness between several hundred nanometers and several hundred micrometers. Thickness of ceramic dielectric material between said plates of electrodes are also in the range of several hundred nanometers. Therefore, well-packed interdigitated very thin electrode systems can be designed by below described method, what is very hardly achievable by other recently used technological approaches. The method comprises providing a multi-layered ceramic-metal capacitor comprising layered structure of a ceramic dielectric material (1), a first internal electrode (2), and a second internal electrode (3), the layered structure being enclosed in a dielectric coating (4), and partially removing the dielectric coating (4) and forming and opening (5) at one side of the multi-layered ceramic-metal capacitor to expose edges (2", 3") of the side of the layered structure of the ceramic dielectric material (1), the first internal electrode (2) and the second internal electrode (3) both suitable for the design of an electrochemical cell. The opening (5) can be formed by simply leaving this part of metal-ceramic capacitor not covered by insulating layer during the manufacture of capacitor or opened after the formation of electro-isolating coating by abrasive materials and/or robering, grinding and polishing devices and/or removal of initially attached removable protecting-tape. Afterwards conducting parts (8', 8"), such as insulated wires (8') and/or conductive paths (8") of a mounting board of electronic components, used for electrical connection of electrodes and transmitting signals generated by electrodes (2, 3), are connected to terminals (6, 7) of the electrodes (2, 3). Afterwards, the opening (5) is covered by an easily removable layer (9) of a protective material, such as protecting tape or other easily removable protecting material to protect the working area from covering with additional layer of permanent electrically insulating material. Subsequently part of multi-layered metal-electrode terminals (6, 7) and of the electrodes (2, 3) are covered with permanent electrically insulating material to protect the terminals (6, 7) from the solutions during further modifications of edges (2", 3") of the first and the second electrodes (2, 3). Afterwards the easily removable layer (9) of protecting material is removed from the opening (5) and then edges (2", 3") of the first and the second electrodes (2, 3) once again are exposed for further treatment. Afterwards the multi-layered capacitor is fully immersed into a solution for electrochemical deposition of metal and/or other modifying materials on the exposed edges (2") of the first electrode (2), where an electric potential is applied to the terminal (6) of the first internal electrode (2), the first terminal (6) being connected to potentiostat/galvanostat while the terminal (7) of the second internal electrode (3) is disconnected. Afterwards solution for electrochemical deposition of metal and/or other modifying materials is changed for electrochemical deposition of a different material of metal and/or other modifying materials onto the exposed edges (3") of the second electrode (3), where an electric potential is applied to the terminal (7) of the second electrode (3), the second terminal (7) being connected to potentiostat/galvanostat while the terminal (6) of the first electrode (2) is disconnected. In the last step the electrodes (2, 3) are at least partially submerged into liquid electrolyte solution, producing an electrochemical cell.

Multiple electrochemical cells can be obtained within multi-wailed plates of enzyme linked immune sorbent assay (ELISA)-plate or similar multi-wailed systems.

In a single multi-layered metal-ceramics-based capacitor the plates are interdigitated, therefore, after pre-treatment they are forming and ideal interdigitated-electrode-based structure suitable for various electrochemical systems, which can be applied for various purposes including batteries, rechargeable accumulators, electrolytic capacitors, electrochemical sensors, electrochemical biosensors, electrochemical fuel cells and biofuel cells.

The invention encompasses any number of variation of electrodes of any number of capacitors within an electrochemical cell thus obtained.

### BRIEF DESCRIPTION OF THE DRAWINGS

Features of the invention believed to be novel and inventive are set forth with particularity in the appended claims. The invention itself, however, may be best understood by reference to the following detailed description of the invention, which describes exemplary embodiments, given in non-restrictive examples, of the invention, taken in conjunction with the accompanying drawings, in which:
Fig. 1 shows a commercially available multi-layered ceramic capacitor having two electrodes.
Fig. 2 shows a step of opening an area of insulating layer of a multi-layered ceramic capacitor to expose side edges of ceramic dielectric material and side edges of plates of first electrode and side edges of plates of second electrode.
Fig. 3 shows a step of providing a covering tape or other easily removable covering material on the opening and mounting step of one multi-layered capacitor on a montage-plate.
Fig. 4 shows a step of providing a covering tape or other easily removable covering material on the openings and mounting step of two multi-layered capacitors on a montage-plate.
Fig. 5 shows a step of covering terminals of the electrodes by a covering tape or other easily removable covering material to protect terminal parts of one multi-layered capacitor and surface of the montage plate from covering by additional insulting layer during further modifications.
Fig. 6 shows a step of covering terminals of the electrodes by a covering tape or other easily removable covering material to protect terminal parts of two multi-layered capacitor and surface of the montage plate from covering by additional insulting layer during further modifications.
Fig. 7 shows deposition of electrically insulating layer on conducting parts of one capacitor, which should be electrically insulated from the solution.
Fig. 8 shows deposition of electrically insulating layer on conducting parts of two capacitors, which should be electrically insulated from the solution.
Fig. 9 shows a step of removing the insulating material from the opening of one capacitor.
Fig. 10 shows a step of removing the insulating material from the openings of two capacitors.
Fig. 11 shows a step of immersing the capacitor into solution used for electrochemical deposition of metal and/or other modifying materials on to edges of plates of the electrodes of one capacitor.
Fig. 12 shows a step of immersing the capacitor into solution used for electrochemical deposition of metal and/or other modifying materials on to edges of plates of the electrodes of two capacitors.
Fig. 13 shows a step of immersing a capacitor into solution used for electrochemical deposition of metal and/or other modifying materials on to edges of plates of the electrodes of one capacitor into a well of a ELISA system. The same figure represents the application of electrochemical cell based on ELISA system for analytical purposes.
Fig. 14 shows layout of electrodes of an electrochemical cell comprising two multi-layered ceramic-metal capacitors in four-electrode setup, where each capacitor comprises two electrodes: one electrode of each capacitor is a working electrode, one another electrode of any of the two capacitors is a reference electrode and the remaining electrode is a counter electrode.
Fig. 15 shows layout of electrodes of an electrochemical cell comprising two multi-layered ceramic-metal capacitors in three-electrodes setup, where each capacitor comprises two electrodes: one electrode of one capacitor is a working electrode, another electrode of the same capacitor is a reference electrode, and both electrodes of the second capacitor are counter electrodes.
Fig. 16 shows an embodiment according to the invention of an electrochemical cell comprising two electrodes of a single multi-layered capacitor in two electrodes configuration.
Fig. 17 shows an embodiment according to the invention of electrochemical cell comprising four electrodes of two multi-layered capacitors suitable for three- or four-electrodes setup.
Fig. 18 shows an example of multiple electrochemical cells comprising wells of enzyme linked immune sorbent assay (ELISA)-plate. The same figure represents the application of multiple electrochemical cells based on multi-walled ELISA plate with multi-layered capacitor based electrodes for analytical purposes.
Fig. 19 shows a Cyclic Voltammogram of electrochemical system designed according to the scheme presented in figure 17, where working electrode is a bare Ti working electrode; reference electrode is an electrode coated by silver toughly electrochemically coated by silver chloride Ag/AgCI; counter electrode is based on set of interdigitated electrodes, made of bare titanium Ti. Experiment in 0.1 M Phosphate saline buffer with 0.01 KCI.
Fig. 20. shows an example of application of an electrochemical cell as shown in Fig. 15 comprising two capacitors in three electrode setup according to the invention for design of an amperometric glucose biosensor.
Fig. 21 shows amperometric responses of glucose biosensor designed according to the scheme presented in figure 20, at three electrode mode, towards different glucose concentrations. Amperometric measurement was performed at +800 mV vs. Ag/AgCI. Arrows indicate concentrations of glucose added into the solution.

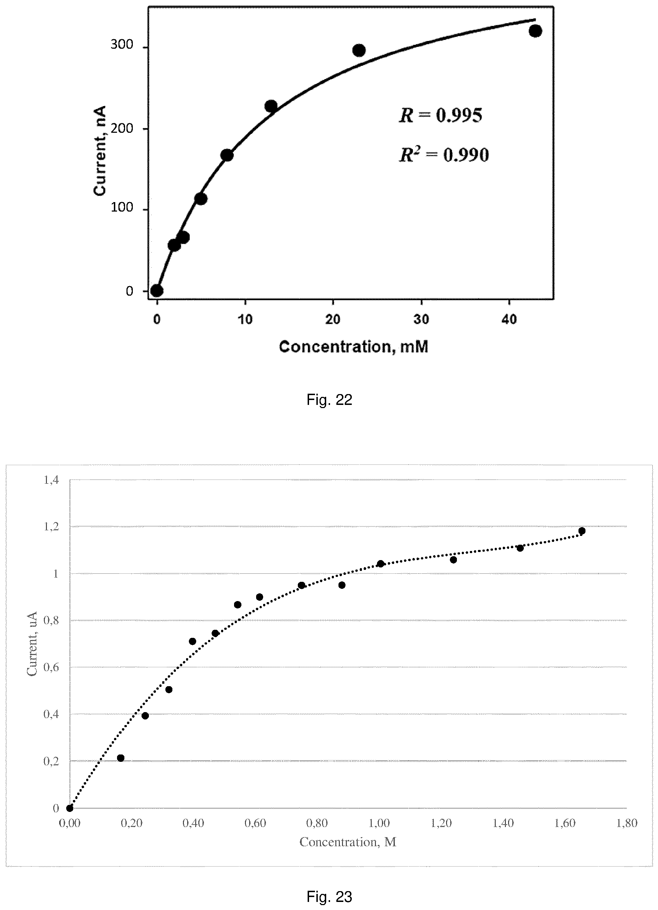

Fig. 22 shows amperometrically measured currents of glucose biosensor designed according to the scheme presented in figure 20, at three electrode mode, at different glucose concentrations.
Fig. 23 shows amperometrically measured currents of hydrogen peroxide H₂O₂ designed according to the scheme presented in figure 16, at two electrode mode, at different hydrogen peroxide H₂O₂ concentrations.

Preferred embodiments of the invention will be described herein below with reference to the drawings. Each figure contains the same numbering for the same or equivalent elements.

### DETAILED DESCRIPTION OF THE INVENTION

It should be understood that numerous specific details are presented in order to provide a complete and comprehensible description of the invention embodiment. However, the person skilled in art will understand that the embodiment examples do not limit the application of the invention, which can be implemented without these specific instructions. Well-known methods, procedures and components have not been described in detail for the embodiment to avoid misleading. Furthermore, this description should not be considered to be constraining the invention to given embodiment examples but only as one of the possible implementations of the invention.

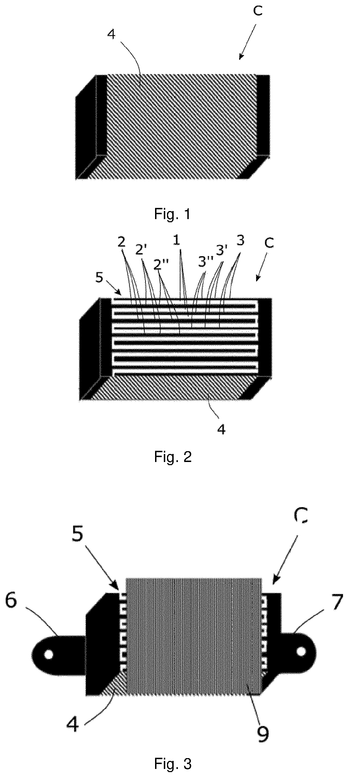

Method of manufacturing an electrochemical cell according to the invention comprises providing a common structure multi-layered layered ceramic-metal capacitor (C), such as multi-layered layered ceramic-metal micro capacitor (C), as shown in Fig. 1, comprising a plurality of sequential layers structure, as shown in Fig. 2, of layers of ceramic dielectric material (1) and metal plates (2', 3') and an insulating coating (4) for encapsulating the layered structure of the capacitor (C) and insulation from other electronic parts of a circuit. A first set of metal plates (2') constitute overlapping plates of a first internal electrode (2) and a second set of metal plates (3') constitute overlapping plates of a second internal electrode (3), where the sequence of layers is such that a layer of ceramic dielectric material (1) is formed between every metal plate (2', 3'). Every first metal plate (2') is interconnected to constitute a first electrode (2) and every second metal plate (3') is interconnected to constitute a second electrode (3).

In all embodiments of the invention electrodes are conducting electrodes.

In all embodiments, a multi-layered metal-ceramics-based micro capacitor comprises electrodes comprising interdigitated plates. Therefore, after the pre-treatment described in further modification steps they are forming and ideal interdigitated-electrode-based structure suitable for various electrochemical systems.

An opening (5) is formed on at least one side of the multi-layered ceramic-metal capacitor (C) by removing part of coating (4) from layered structure side and exposing layers of ceramic dielectric material (1), side edges (2") of metal plates (2') of the first internal electrode (2), and side edges (3") of the metal plates (3') of the second internal electrode (3).

The side edges (2", 3") of the first and the second electrodes (2, 3) are exposed to form a working area, e.g. a sensing area. The opening (5) is formed during the manufacture process or if ready ceramic capacitor (C) is used then the opening is formed by abrasive materials and/or robering, grinding or polishing device to eliminate the coating (4) up to surface of the side edges (2", 3") of the first and the second electrodes (2, 3). After the electro-isolating coating (4) is removed, the side edges (2", 3") of the first and the second electrodes (2, 3), together with side edges of ceramic dielectric material (1) in between them, is polished using fine abrasive materials such as Al₂O₃ and/or robering, grinding or polishing device.

As shown in Fig. 3, afterwards, the opening (5) is covered by an easily removable layer (9) of insulating material to protect the working area from covering with permanent insulating material. The easily removable layer (9) of insulating material is disposed in such a way that would cover and protect side edges (2", 3") of the first and the second electrodes (2, 3) and side edges of ceramic dielectric material (1) in between them.

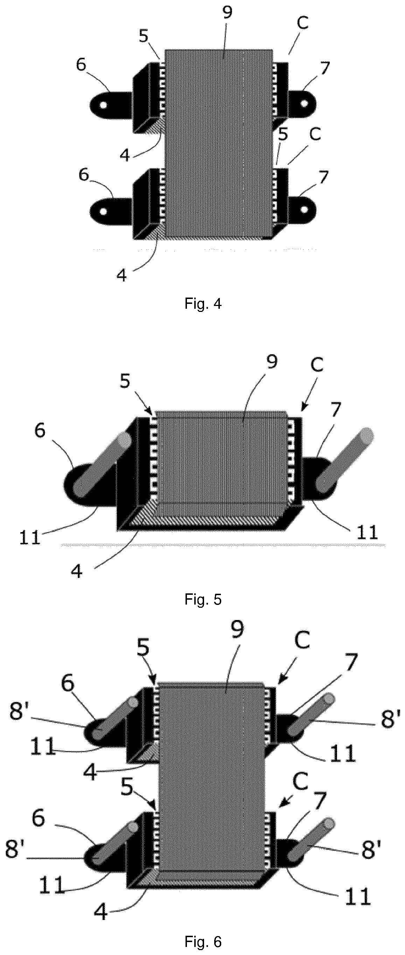

The method comprises connecting first internal electrode (2) to an electrode terminal (6) disposed on one end of the capacitor (C) and connecting the second internal electrode (3) to an electrode terminal (7) disposed on a second end of the capacitor (C), opposite the first end. The same applies if two, as shown in Fig. 4, or more capacitors are used instead of one.

As shown in Fig. 5, the method further comprises connecting signal transmitting means (8', 8") to terminals (6, 7) of the electrodes (2, 3) for transmitting signals from working area. The signal transmitting means (8', 8") can be insulated wires (8') and/or conducting paths (8") of a mounting plate for mounting the multi-layered ceramic-metal capacitor and/or arrays of micro-layered capacitors on such mounting plate (8"). The same applies if two, as shown in Fig. 6, or more capacitors are used instead of one.

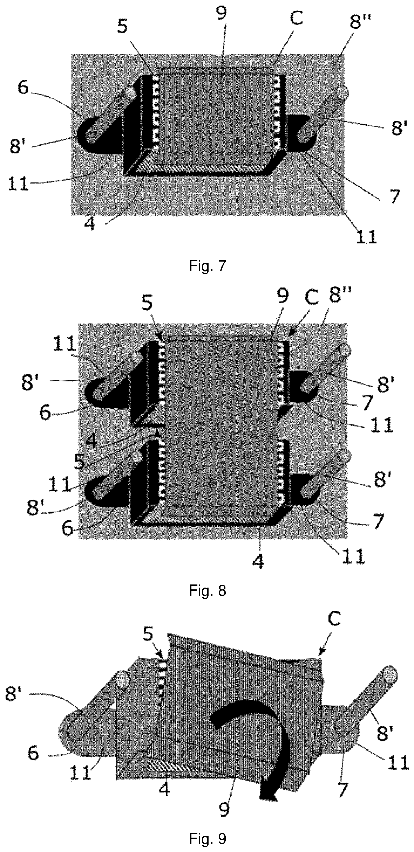

As shown in Fig. 7, subsequently, the terminals (6, 7) of the electrodes (2, 3) are covered with permanent insulating material (11) to protect the terminals (6, 7) from solutions during further modifications of edges (2", 3") of the first and the second electrodes (2, 3). The same applies if two, as shown in Fig. 8, or more capacitors are used instead of one.

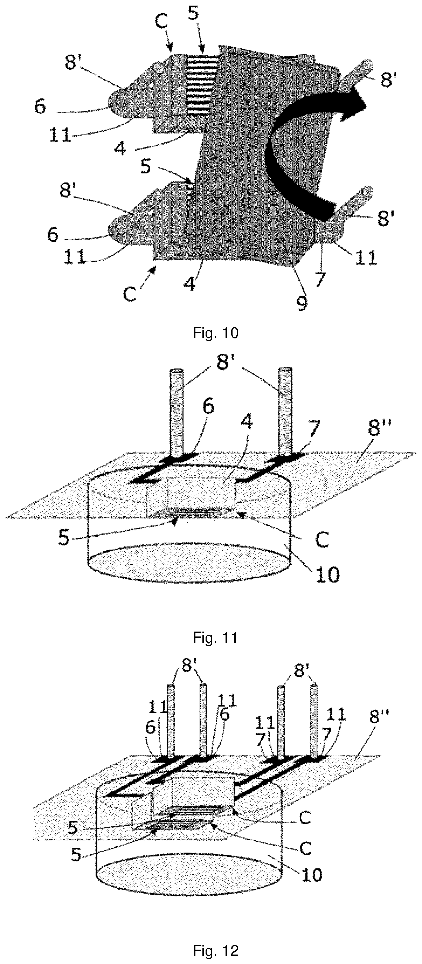

As shown in Fig. 9, afterwards the easily removable layer (9) of insulating material from the opening (5) is removed once again exposing edges (2", 3") of the first and the second electrodes (2, 3) for further treatment. The same applies if two, as shown in Fig. 10, or more capacitors are used instead of one.

Afterwards the multi-layered capacitor (C) is fully immersed into a solution for electrochemical deposition of metal and/or other modifying materials on the exposed edges (2") of the first electrode (2). An electric potential is applied to the terminal (6) of the first internal electrode (2). The first terminal (6) is connected to potentiostat/galvanostat while the terminal (7) of the second internal electrode (3) is disconnected. Thus, the exposed edges (2") of the plates (2') of first electrode (2) is electrochemically modified by plating with a metallic layer. The same applies if two or more capacitors are used instead of one.

Afterwards, solution for electrochemical deposition of a different material of a metal and/or other modifying materials is changed for electrochemical deposition of metal and/or other modifying materials onto the exposed edges (3") of the second electrode (3). An electric potential is applied to the terminal (7) of the second electrode (3). The second terminal (7) is connected to potentiostat/galvanostat while the terminal (6) of the first electrode (2) is disconnected. Thus, the exposed edges (3") of the plates (3') of second electrode (3) is electrochemically modified by plating with a metallic layer. The same applies if two or more capacitors are used instead of one.

The exposed edges (2", 3") of the plates (2', 3') of the electrodes (2, 3) are electrochemically plated by a metallic layer selected from inert and/or electrochemically active metals such as gold Au, platinum Pt, palladium Pa, ruthenium Ru, titanium Ti, copper Cu, manganese Mn, iron Fe, cobalt Co, aluminium Al, zinc Zn or electrochemically deposited alloys formed out of these metals, and/or other electrochemically depositable material, such as electrochemically generated conducting polymers, such as polypyrrole, polyaniline, polythiophene, poly(3,4-ethylenedioxythiophene. The material for the deposition layer is selected dependently on function of the electrodes (2, 3) in a particular electrochemical system. The exposed edges (2", 3") of the plates (2', 3') of the electrodes (2, 3) are electrochemically modified to provide advanced stability and/or electrocatalytic activity.

When a multi-layered ceramic-metal capacitor (C) has more than two electrodes, where each electrode would have an exposed edge after insulating coating is removed from an area on a side of such multi-layered ceramic-metal capacitor exposing edges of plates of all electrodes, the procedure as described above for producing an electrochemical cell is the same. In such a case the exposed edges of plates of each electrode would be plated according to method above.

As shown in Fig. 11, after the electrochemical deposition, the side edges (2") of metal plates (2') of the first internal electrode (2), and side edges (3") of the metal plates (3') of the second internal electrode (3) exposed in the opening (5) of the coating (4) on side of the multi-layered ceramic-metal capacitor (C) are submerged into a medium (10) of liquid electrolyte.

In the same manner as described above two and more capacitors may be processed simultaneously or sequentially to obtain an electrochemical cell having accordingly two, as shown in Fig. 12, or more capacitors each having two electrodes.

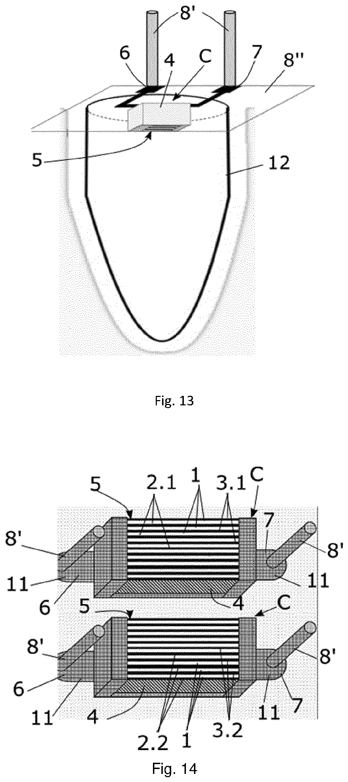

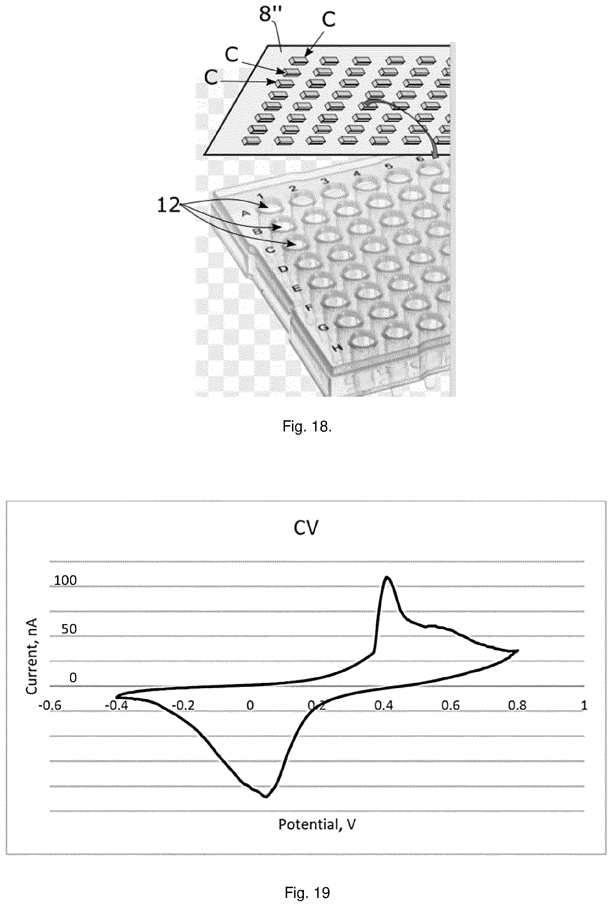

Multiple electrochemical cells, each cell having two or more capacitors, can be obtained within multi-wailed plates of enzyme linked immune sorbent assay (ELISA)-plate or similar multi-wailed systems, as shown in Fig. 13 and Fig. 18.

In all embodiments of the invention an electrochemical cell comprises at least one working electrode, at least one reference electrode and at least one counter electrode where each electrode comprises exposed edges of the plates of the electrodes.

In all embodiments of the invention an electrochemical cell comprises at least one working electrode, at least one reference electrode and at least one counter electrode where each electrode comprises exposed edges of the plates of the electrodes. Also, in all embodiments each electrode comprises preferably two or more interdigitated plates.

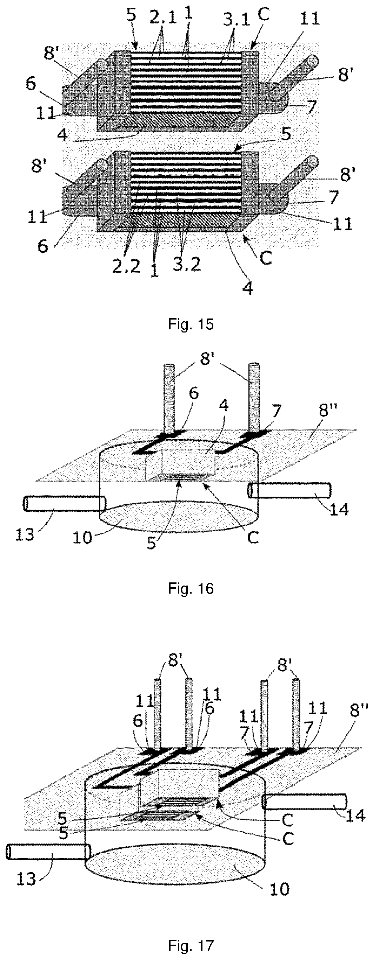

In embodiments of the invention and according to Fig. 11 and Fig. 16 when an electrochemical cell comprises one multi-layered ceramic-metal capacitor (C) comprising two electrodes (2, 3), as shown in Fig. 2: one electrode is a working electrode (2) and another electrode is reference and counter electrode (3).

In embodiments of the invention when an electrochemical cell comprises two multi-layered ceramic-metal capacitors (C) each comprising two electrodes (2.1, 3.1; 2.2, 3.2), as shown in Fig. 14: one electrode (2.1, 2.2) of each capacitor is a working electrode, one another electrode (3.1) of any of the two capacitors is a reference electrode and the remaining electrode (3.2) is a counter electrode.

In embodiments of the invention and as shown in Fig. 12, Fig. 17, Fig. 20 when an electrochemical cell comprises two multi-layered ceramic-metal capacitors each comprising two electrodes (2.1, 3.1; 2.2, 3.2): one electrode of one capacitor is a working electrode (2.1), another electrode of the same capacitor is a reference electrode (3.1), and both electrodes of the second capacitor are counter electrodes (2.2, 3.2), working as a uniform single counter electrode. Such configuration of electrodes in all embodiments is called three electrodes setup as shown in Fig. 15.

As an example of electrochemical plating of electrodes (2.1, 3.1; 2.2, 3.2) of three electrodes setup in embodiments of electrochemical cells, working electrode (2.1) may be electrochemically deposited with inert and/or electrochemically active metals such as gold Au, platinum Pt, palladium Pa, ruthenium Ru, titanium Ti, copper Cu, manganese Mn, iron Fe, cobalt Co, aluminium Al, zinc Zn or alloys formed out of these metals. Electrochemically deposited alloys based on these and/or other metals also can be designed and applied for the same purpose for electrochemical plating a reference electrode (3.1), e.g. silver Ag is partly electrochemically turned into Ag/AgCI structure, which enables to apply this Ag/AgCI structure as a reference electrode, for action in three electrode mode. Counter electrode (2.2, 3.2) can be used bare, when made of titanium, without electrochemical plating, because titanium is rather inert. If necessary to have advanced properties, this counter electrode (2.2, 3.2) can be covered by inert and/or electrochemically active metals such as gold Au, platinum Pt, palladium Pa, ruthenium Ru, titanium Ti, copper Cu, manganese Mn, iron Fe, cobalt Co, aluminium Al, zinc Zn or electrochemically deposited alloys formed out of these metals.

In order to advance the selectivity of electrochemical cells further electrochemical modification of electrodes (2.1, 3.1; 2.2, 3.2) can be applied by applying functionalized coatings (21), such as conducting polymer or conducting polymer based composite, sol gel or functionalized sol gel, silanization layer modified by proteins, DNA, RNA, covered by self-assembled monolayer or self-assembled monolayer modified by proteins, DNA, RNA, cross linked, adsorbed or in another way immobilized protein layers.

Plates of electrodes of the most of multi-layered ceramic-metal capacitors are made of titanium.

In a particular case of an electrochemical cell comprising three electrodes, a reference electrode, is based on silver toughly electrochemically coated by silver chloride Ag/AgCI or other metal coated by Ag/AgCI layers. Counter electrode is based on any electrochemically deposited inert metal, such as Au, Pt, Ti, Ag, Cr, Ni, Sn, or electrochemically deposited alloy and/or layered structure based on these and/or other metals.

According to one embodiment of the invention and as show in Fig. 16 and Fig. 17, an electrochemical cell is a flow-through electrochemical cell, further to embodiments of Fig. 11 and Fig. 12 respectively comprises a flow-through liquid system with inlet (13) and outlet (14) pipes connecting to an external liquid handling/pumping system. Such electrochemical cell may comprise a single multi-layered capacitor comprising two electrodes (2, 3), where one is a working electrode (2) and another one is a counter and reference electrode (3); two capacitators each comprising two electrodes in any configuration of operation of said electrodes (2.1, 3.1; 2.2, 3.2) as working, counter and reference electrodes; or multiple capacitators each comprising two electrodes in any configuration of operation of said electrodes as working, counter and reference electrodes
Using ELISA-plate-based system each electrochemical deposition step can be carried out in wells (12) of in enzyme linked immune sorbent assay plate system, where each well (12) is dedicated for treating one multi-layered ceramic-metal capacitor (C) or multiple multi-layered ceramic-metal capacitors (C). Each well (12) of multi-wailed plate of enzyme linked immune sorbent assay (ELISA)-plate can be filled with different solution for electrochemical deposition for treating a multi-layered ceramic-metal capacitor (C) or capacitors (C) dipped in each well. EILSA-plate-based system can be applied for both for electrochemical deposition of metal and/or other modifying materials on to edges of plates of the electrodes of multiple capacitors and for electrochemical measurements, forming an electrochemical cell.

An example of materials used for electrochemical plating of electrodes (2.1, 3.1; 2.2, 3.2) of tree-electrode electrochemical cell based on two multilayer metal-ceramics capacitors (C) will be discussed hereafter. Structure of the electrochemical cell is the same as shown in Fig. 12 and Fig. 17 and setup of electrodes is the same as shown in Fig. 15.

The working electrode (2.1), is coated as follows: exposed edges of plates of the working electrode (2.1) are additionally electrochemically plated by a metallic layer selected from inert and/or electrochemically active metals such as gold Au, platinum Pt, palladium Pa, ruthenium Ru, titanium Ti, copper Cu, manganese Mn, iron Fe, cobalt Co, aluminium Al, zinc Zn or electrochemically deposited alloys formed out of these metals, and/or other electrochemically depositable material, such as electrochemically generated conducting polymers, e.g.: polypyrrole, polyaniline, polythiophene, poly(3,4-ethylenedioxythiophene).

The reference electrode (3.1) is coated by silver chloride Ag/AgCI or other metal coated by Ag/AgCI layers. The exposed edges of plates of the reference electrode (3.1) are electrochemically plated by silver (Ag), which in the presence of Cl- ions in solution is electrochemically partly turned into Ag/AgCI structure, which enables to apply this formed Ag/AgCI structure as a reference electrode (3.1).

The counter electrode (2.2, 3.2), comprised of two electrodes (2.2, 3.2) , is used bare, because it is made of titanium which is rather inert. In addition, if necessary to have advanced properties, the counter electrode (2.2, 3.2) can be covered by inert and/or electrochemically active metals such as gold Au, platinum Pt, palladium Pa, ruthenium Ru, titanium Ti, copper Cu, manganese Mn, iron Fe, cobalt Co, aluminium Al, zinc Zn or electrochemically deposited alloys formed out of these metals.

Insulated wires (8') are connecting the working electrode, the reference electrode and the counter electrode to corresponding inputs of potentiostat/galvanostat.

Additional coatings (21), membranes, may be provided on working area defined by openings (5) in the coating (4) of multi-layered ceramic-metal capacitors. Such membranes increases selectivity of designed electrochemical system, e.g. polycarbonate membrane, polypyrrole layer, which reduces permeability of some ions, or catalyst, e.g. enzymes such as glucose oxidase, containing layer/membrane.

An example of electrochemical plating of electrodes (2.1, 3.1; 2.2, 3.2) of tree-electrode electrochemical cell for amperometric glucose biosensor based on two multilayer metal-ceramics capacitors (C) will be discussed hereafter. Structure of the electrochemical cell is the same as shown in Fig. 12 and Fig. 17 and setup of electrodes is the same as shown in Fig. 15.

Working electrode (2.1) is based on set of interdigitated plates of the electrode (2.1) electrochemically coated by platinum (Pt), and polypyrrole with entrapped Glucose oxidase.

Reference electrode (3.1) is based on set of interdigitated plates of the electrode (3.1) coated by silver toughly electrochemically coated by silver chloride (Ag/AgCI).

Counter electrode (2.2, 3.2) is based on set of interdigitated plates of the electrode (2.2, 3.2) , made of bare titanium (Ti).

Insulated wires (8') are connecting the working electrode, the reference electrode and the counter electrode to corresponding inputs of potentiostat/galvanostat.

Additional coating, polycarbonate membranes, are provided on working area defined by openings (5) in the coating (4) of multi-layered ceramic-metal capacitors for protecting surfaces of working and reference electrodes.

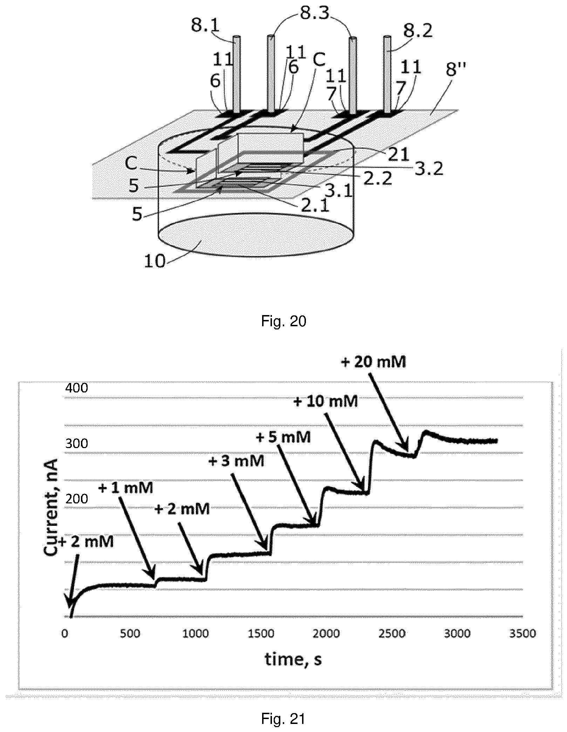

An example of application of an electrochemical cell according to the invention for design of an amperometric glucose biosensor is presented in Fig. 20 and discussed hereafter. The biosensor comprises an electrochemical cell comprising two metal-ceramic multi-layered capacitors (C) having three-electrode setup according to the invention. The working electrode (2.1) is an electrode comprising interdigitated plates, electrochemically coated by platinum Pt, and polypyrrole with entrapped Glucose oxidase. The reference electrode (3.1) is an electrode comprising interdigitated plates, coated by silver toughly electrochemically coated by silver chloride Ag/AgCl. The counter electrode (2.2, 3.2) is an electrode comprising interdigitated plates made of bare titanium Ti. Insulated wire (8.1) connects working electrode (2.1) to corresponding input of potentiostat/galvanostat. Insulated wire (8.2) connects reference electrode (3.1) to corresponding input of potentiostat/galvanostat. Insulated wire (8.3) connects counter electrode (2.2, 3.2) to corresponding input of potentiostat/galvanostat. Additional coating (21) of polycarbonate membranes is protecting surfaces of working (2.1), reference (3.1) and counter (2.2, 3.2) electrodes from electrochemically active materials and/or fouling by proteins and/or other interfering materials. Although numerous characteristics and advantages together with structural details and features have been listed in the present description of the invention, the description is provided as an example fulfilment of the invention. Without departing from the principles of the invention, there may be changes in the details, especially in the form, size and layout, in accordance with the most widely understood meanings of the concepts and definitions used in the claims.

## Claims

1. A method of manufacturing an electrochemical cell comprising providing a multi-layered ceramic-metal capacitor comprising layered structure of a ceramic dielectric material, a first internal electrode comprising interdigitated plates, and a second internal electrode comprising interdigitated plates, being enclosed in a dielectric coating, and opening an area in the dielectric coating at one side of the multi-layered ceramic-metal capacitor to expose edges of the side of the layered structure of the ceramic dielectric material, the first internal electrode and the second internal electrode for producing a working area of an electrochemical cell **characterised in that**
after an opening (5) is formed in the coating (4) on side of the multi-layered ceramic-metal capacitor (C), exposing layers of ceramic dielectric material (1), side edges (2") of metal plates (2') of the first internal electrode (2), and side edges (3") of the metal plates (3') of the second internal electrode (3), signal transmitting means (8', 8") for transmitting signals from the working area via electrodes (2, 3) are connected to terminals (6, 7) of the electrodes (2, 3).
afterwards, the opening (5) is covered by an easily removable layer (9) of protecting material to protect the working area from covering with permanent insulating material,
subsequently the terminals (6, 7) of the electrodes (2, 3) are covered with permanent insulting material (11) to protect the terminals (6, 7) from solutions during further modifications of edges (2", 3") of the first and the second electrodes (2, 3),
afterwards the easily removable layer (9) of insulating material from the opening (5) is removed once again exposing edges (2", 3") of the first and the second electrodes (2, 3) for further treatment,
afterwards the multi-layered capacitor (C) is fully immersed into a solution for electrochemical deposition of metal and/or other modifying materials on the exposed edges (2") of the first electrode (2), where an electric potential is applied to the terminal (6) of the first internal electrode (2), the first terminal (6) being connected to potentiostat/galvanostat while the terminal (7) of the second internal electrode (3) is disconnected,
afterwards solution for electrochemical deposition of metal and/or other modifying materials is changed for electrochemical deposition of a different material of metal and/or other modifying materials onto the exposed edges (3") of the second electrode (3), where an electric potential is applied to the terminal (7) of the second electrode (3), the second terminal (7) being connected to potentiostat/galvanostat while the terminal (6) of the first electrode (2) is disconnected,
where after the electrochemical deposition the side edges (2") of metal plates (2') of the first internal electrode (2), and side edges (3") of the metal plates (3') of the second internal electrode (3) exposed in the opening (5) of the coating (4) on side of the multi-layered ceramic-metal capacitor (C) are submerged into a medium (10) of liquid electrolyte.

2. The method according to claim 1, where the steps in claim 1 are performed for two or more multi-layered ceramic-metal capacitors (C) forming an electrochemical cell based on more than two electrodes (2.1, 3.1; 2.2, 3.2).

3. The method according to claim 1, where one electrode (2) is formed as a working electrode and another electrode (3) is formed as a reference and counter electrode.

4. The method according to claim 2, where two or more multi-layered ceramic-metal capacitors (C) are provided, each comprising two electrodes (2.1, 3.1; 2.2, 3.2), one electrode (2.1, 2.2) of each capacitor (C) is formed as a working electrode, one another electrode (3.1) of any of the two capacitors (C) is formed as a reference electrode and the remaining electrode (3.2) is formed as a counter electrode.

5. The method according to claim 2, where two or more multi-layered ceramic-metal capacitors (C) are provided, each comprising two electrodes (2.1, 3.1; 2.2, 3.2), one electrode (2.1) of one capacitor (C) is formed as a working electrode, another electrode (3.1) of the same capacitor (C) is formed as a reference electrode, and both electrodes of the second capacitor (2.2, 3.2) are formed as counter electrodes.

6. The method according to any of previous claims where edges of the plates of the electrodes (2, 3; 2.1, 3.1; 2.2, 3.2) exposed towards solution are electrochemically plated by a metallic layer selected from inert and/or electrochemically active metals such as gold Au, platinum Pt, palladium Pa, ruthenium Ru, titanium Ti, copper Cu, manganese Mn, iron Fe, cobalt Co, aluminium Al, zinc Zn or electrochemically deposited alloys formed out of these metals, and/or other electrochemically depositable material, such as electrochemically generated conducting polymer, such as polypyrrole, polyaniline, polythiophene, poly(3,4-ethylenedioxythiophene), and the material for the deposition layer is selected dependently on function of the electrodes (2, 3; 2.1, 3.1; 2.2, 3.2) in a particular electrochemical system.

7. Method according to any of the previous claims where each electrochemical deposition step is carried out in wells (12) of an enzyme linked immune sorbent assay plate system, where each well (12) is dedicated for treating one multi-layered ceramic-metal capacitor or multiple multi-layered ceramic-metal capacitors.

8. An electrochemical cell obtained by method according to any one of claims 1-7.

9. An electrochemical cell according claim 8, where it comprises a flow-through liquid system with inlet (13) and outlet (14) pipes connecting to external liquid handling/pumping system.

## Patentansprüche

1. Verfahren zum Herstellen einer elektrochemischen Zelle, umfassend Bereitstellen eines mehrschichtigen Keramik-Metall-Kondensators, der eine geschichtete Struktur eines dielektrischen Keramikmaterials umfasst, eine erste innere Elektrode, die ineinandergreifende Platten umfasst, und eine zweite innere Elektrode, die ineinandergreifende Platten umfasst, die in einer dielektrischen Beschichtung eingeschlossen sind, und Öffnen eines Bereichs in der dielektrischen Beschichtung auf einer Seite des mehrschichtigen Keramik-Metall-Kondensators, um Ränder der Seite der geschichteten Struktur des dielektrischen Keramikmaterials freizulegen, wobei die erste innere Elektrode und die zweite innere Elektrode zum Produzieren eines Arbeitsbereichs einer elektrochemischen Zelle dienen, **dadurch gekennzeichnet, dass**
nachdem eine Öffnung (5) in der Beschichtung (4) auf der Seite des mehrschichtigen Keramik-Metall-Kondensators (C) gebildet wurde, wobei Schichten des dielektrischen Keramikmaterials (1), Seitenränder (2") der Metallplatten (2`) der ersten inneren Elektrode (2) und Seitenränder (3") der Metallplatten (3") der zweiten inneren Elektrode (3) freigelegt wurden, ein Signalübertragungsmittel (8', 8") zum Übertragen von Signalen aus dem Arbeitsbereich über Elektroden (2, 3) mit Anschlüssen (6, 7) der Elektroden (2, 3) verbunden werden,
anschließend die Öffnung (5) durch eine leicht entfernbare Schicht (9) aus schützendem Material abgedeckt wird, um den Arbeitsbereich vor dem Abdecken mit dauerhaft isolierendem Material zu schützen,
danach die Anschlüsse (6, 7) der Elektroden (2, 3) mit einem dauerhaft isolierenden Material (11) abgedeckt werden, um die Anschlüsse (6, 7) während weiterer Modifikationen von Rändern (2", 3") der ersten und der zweiten Elektrode (2, 3) vor Lösungen zu schützen,
anschließend die leicht entfernbare Schicht (9) noch einmal aus isolierendem Material aus der Öffnung (5) entfernt wird, um Ränder (2", 3") der ersten und der zweiten Elektrode (2, 3) zur weiteren Behandlung freizulegen,
anschließend der mehrschichtige Kondensator (C) vollständig in eine Lösung zur elektrochemischen Abscheidung von Metall und/oder anderen modifizierenden Materialien an den freiliegenden Rändern (2") der ersten Elektrode (2) eingetaucht wird, wobei ein elektrisches Potential an den Anschluss (6) der ersten inneren Elektrode (2) angelegt wird, wobei der erste Anschluss (6) mit Potentiostat/Galvanostat verbunden wird, während der Anschluss (7) der zweiten inneren Elektrode (3) getrennt ist,
anschließend eine Lösung zur elektrochemischen Abscheidung von Metall und/oder anderen modifizierenden Materialien zur elektrochemischen Abscheidung eines anderen Materials von Metall und/oder anderen modifizierenden Materialien auf den freiliegenden Rändern (3") der zweiten Elektrode (3) verändert wird, wobei ein elektrisches Potential an den Anschluss (7) der zweiten Elektrode (3) angelegt wird, wobei der zweite Anschluss (7) mit dem Potentiostat/Galvanostat verbunden wird, während der Anschluss (6) der ersten Elektrode (2) getrennt ist,
wobei nach der elektrochemischen Abscheidung die Seitenränder (2") der Metallplatten (2') der ersten inneren Elektrode (2) und die Seitenränder (3") der Metallplatten (3') der zweiten inneren Elektrode (3), die in der Öffnung (5) der Beschichtung (4) auf der Seite des mehrschichtigen Keramik-Metall-Kondensators (C) freigelegt sind, in ein Medium (10) aus flüssigem Elektrolyt eingetaucht werden.

2. Verfahren nach Anspruch 1, wobei die Schritte in Anspruch 1 für zwei oder mehr mehrschichtige Keramik-Metall-Kondensatoren (C) durchgeführt werden, wobei eine elektrochemische Zelle auf Grundlage von mehr als zwei Elektroden (2.1, 3.1; 2.2, 3.2) gebildet wird.

3. Verfahren nach Anspruch 1, wobei eine Elektrode (2) als Arbeitselektrode gebildet wird und eine andere Elektrode (3) als Referenz- und Gegenelektrode gebildet wird.

4. Verfahren nach Anspruch 2, wobei zwei oder mehr mehrschichtige Keramik-Metall-Kondensatoren (C) bereitgestellt werden, die jeweils zwei Elektroden (2.1, 3.1; 2.2, 3.2) umfassen, wobei eine Elektrode (2.1, 2.2) jedes Kondensators (C) als Arbeitselektrode gebildet wird, eine andere Elektrode (3.1) eines beliebigen der zwei Kondensatoren (C) als Referenzelektrode gebildet wird und die übrige Elektrode (3.2) als Gegenelektrode gebildet wird.

5. Verfahren nach Anspruch 2, wobei zwei oder mehr mehrschichtige Keramik-Metall-Kondensatoren (C) bereitgestellt werden, die jeweils zwei Elektroden (2.1, 3.1; 2.2, 3.2) umfassen, wobei eine Elektrode (2.1) eines Kondensators (C) als Arbeitselektrode gebildet wird, eine andere Elektrode (3.1) des gleichen Kondensators (C) als Referenzelektrode gebildet wird und beide Elektroden des zweiten Kondensators (2.2, 3.2) als Gegenelektroden gebildet werden.

6. Verfahren nach einem der vorhergehenden Ansprüche, wobei Ränder der Platten der Elektroden (2, 3; 2.1, 3.1; 2.2, 3.2), die gegenüber einer Lösung freigelegt sind, durch eine metallische Schicht elektrochemisch plattiert werden, die ausgewählt ist aus inerten und/oder elektrochemisch aktiven Metallen, wie etwa Gold Au, Platin Pt, Palladium Pa, Ruthenium Ru, Titan Ti, Kupfer Cu, Mangan Mn, Eisen Fe, Kobalt Co, Aluminium Al, Zink Zn oder elektrochemisch abgeschiedenen Legierungen, die aus diesen Materialien gebildet sind, und/oder anderem elektrochemisch abscheidbarem Material, wie etwa elektrochemisch erzeugtem, leitfähigem Polymer, wie etwa Polypyrrol, Polyanilin, Polythiophen, Poly(3,4-ethylendioxythiophen), und das Material für die Abscheidungsschicht abhängig von der Funktion der Elektroden (2, 3; 2.1, 3.1; 2.2, 3.2) in einem konkreten elektrochemischen System ausgewählt ist.

7. Verfahren nach einem der vorhergehenden Ansprüche, wobei jeder Schritt zur elektrochemischen Abscheidung in Wells (12) eines Plattensystems eines Enzyme-Linked Immunosorbent Assay ausgeführt wird, bei dem jeder Well (12) zum Behandeln eines mehrschichtigen Keramik-Metall-Kondensators oder mehrerer mehrschichtiger Keramik-Metall-Kondensatoren gedacht ist.

8. Elektrochemische Zelle, die durch das Verfahren nach einem der Ansprüche 1-7 erlangt wird.

9. Elektrochemische Zelle nach Anspruch 8, wobei sie ein Flüssigkeitsdurchflusssystem mit Einlassrohren (13) und Auslassrohren (14) umfasst, die mit einem externen Flüssigkeitshandhabungs-/-pumpsystem verbunden sind.

## Revendications

1. Procédé de fabrication d'une cellule électrochimique comprenant la fourniture d'un condensateur céramique-métal multicouche comprenant une structure en couches d'un matériau diélectrique céramique, une première électrode interne comprenant des plaques interdigitées, et une seconde électrode interne comprenant des plaques interdigitées, étant enfermées dans un revêtement diélectrique, et l'ouverture d'une zone dans le revêtement diélectrique sur un côté du condensateur céramique-métal multicouche pour exposer des bords du côté de la structure en couches du matériau diélectrique céramique, la première électrode interne et la seconde électrode interne pour produire une zone de travail d'une cellule électrochimique **caractérisée en ce que**
après qu'une ouverture (5) est formée dans le revêtement (4) sur le côté du condensateur céramique-métal multicouche (C), l'exposition de couches de matériau diélectrique céramique (1), de bords latéraux (2") de plaques métalliques (2') de la première électrode interne (2), et de bords latéraux (3") des plaques métalliques (3') de la seconde électrode interne (3), des moyens de transmission de signaux (8', 8") pour transmettre des signaux provenant de la zone de travail via des électrodes (2, 3) sont connectés aux bornes (6, 7) des électrodes (2, 3),
ensuite, l'ouverture (5) est recouverte d'une couche facilement amovible (9) de matériau de protection pour protéger la zone de travail d'un recouvrement par un matériau isolant permanent,
ensuite, les bornes (6, 7) des électrodes (2, 3) sont recouvertes d'un matériau isolant permanent (11) pour protéger les bornes (6, 7) contre des solutions lors de modifications supplémentaires de bords (2", 3") des première et seconde électrodes (2, 3),
ensuite, la couche facilement amovible (9) de matériau isolant de l'ouverture (5) est retirée, exposant à nouveau des bords (2", 3") des première et seconde électrodes (2, 3) pour un traitement supplémentaire,
ensuite le condensateur multicouche (C) est entièrement immergé dans une solution pour le dépôt électrochimique de métal et/ou d'autres matériaux modificateurs sur les bords exposés (2") de la première électrode (2), où un potentiel électrique est appliqué à la borne (6) de la première électrode interne (2), la première borne (6) étant connectée à un potentiostat/galvanostat tandis que la borne (7) de la seconde électrode interne (3) est déconnectée,
ensuite, une solution pour le dépôt électrochimique de métal et/ou d'autres matériaux modificateurs est remplacée par un dépôt électrochimique d'un matériau différent de métal et/ou d'autres matériaux modificateurs sur les bords exposés (3") de la seconde électrode (3), où un potentiel électrique est appliqué à la borne (7) de la seconde électrode (3), la seconde borne (7) étant connectée à un potentiostat/galvanostat tandis que la borne (6) de la première électrode (2) est déconnectée,
où après le dépôt électrochimique, les bords latéraux (2") de plaques métalliques (2') de la première électrode interne (2), et des bords latéraux (3") des plaques métalliques (3') de la seconde électrode interne (3) exposés dans l'ouverture (5) du revêtement (4) sur le côté du condensateur céramique-métal multicouche (C) sont immergés dans un milieu (10) d'électrolyte liquide.

2. Procédé selon la revendication 1, où les étapes de la revendication 1 sont effectuées pour deux condensateurs céramique-métal multicouches (C) ou plus formant une cellule électrochimique basée sur plus de deux électrodes (2.1, 3.1 ; 2.2, 3.2).

3. Procédé selon la revendication 1, où une électrode (2) est formée comme électrode de travail et une autre électrode (3) est formée comme électrode de référence et contre-électrode.

4. Procédé selon la revendication 2, où deux condensateurs céramique-métal multicouches (C) ou plus sont prévus, comprenant chacun deux électrodes (2.1, 3.1 ; 2.2, 3.2), une électrode (2.1, 2.2) de chaque condensateur (C) est formée comme électrode de travail, une autre électrode (3.1) de l'un quelconque des deux condensateurs (C) est formée comme électrode de référence et l'électrode restante (3.2) est formée comme contre-électrode.

5. Procédé selon la revendication 2, où deux condensateurs céramique-métal multicouches (C) ou plus sont prévus, comprenant chacun deux électrodes (2.1, 3.1 ; 2.2, 3.2), une électrode (2.1) d'un condensateur (C) est formée comme électrode de travail, une autre électrode (3.1) du même condensateur (C) est formée comme électrode de référence, et les deux électrodes du second condensateur (2.2, 3.2) sont formées comme contre-électrodes.

6. Procédé selon l'une quelconque des revendications précédentes, où des bords des plaques des électrodes (2, 3 ; 2.1, 3.1 ; 2.2, 3.2) exposés à une solution sont plaqués électrochimiquement par une couche métallique choisie parmi des métaux inertes et/ou électrochimiquement actifs tels que l'or Au, le platine Pt, le palladium Pa, le ruthénium Ru, le titane Ti, le cuivre Cu, le manganèse Mn, le fer Fe, le cobalt Co, l'aluminium Al, le zinc Zn ou des alliages déposés électrochimiquement formés à partir de ces métaux, et/ou un autre matériau pouvant être déposé électrochimiquement, tel qu'un polymère conducteur généré électrochimiquement, tel que le polypyrrole, la polyaniline, le polythiophène, le poly(3,4-éthylènedioxythiophène), et le matériau pour la couche de dépôt est choisi en fonction de la fonction des électrodes (2, 3 ; 2.1, 3.1 ; 2.2, 3.2) dans un système électrochimique particulier.

7. Procédé selon l'une quelconque des revendications précédentes, où chaque étape de dépôt électrochimique est effectuée dans des puits (12) d'un système de plaque de dosage par immunosorbant lié à une enzyme, où chaque puits (12) est dédié au traitement d'un condensateur céramique-métal multicouche ou de plusieurs condensateurs céramique-métal multicouches.

8. Cellule électrochimique obtenue par le procédé selon l'une quelconque des revendications 1 à 7.

9. Cellule électrochimique selon la revendication 8, où elle comprend un système de liquide à circulation avec des tuyaux d'entrée (13) et de sortie (14) connectés à un système externe de manipulation/pompage de liquide.
